Europäisches Patentamt

European Patent Office

Office européen des brevets

(19)

(11) EP 1 404 045 A2

(12) **EUROPEAN PATENT APPLICATION**

(43) Date of publication:
**31.03.2004 Bulletin 2004/14**

(51) Int Cl.⁷: $H04L\ 1/00$

(21) Application number: **03020518.1**

(22) Date of filing: **16.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.09.2002 IT MI20022035**

(71) Applicant: **PROD-EL S.p.A.**
**20132 Milano (IT)**

(72) Inventors:
• **Zani, Nicola**
**25075 Nave (BS) (IT)**
• **Garue, Elena**
**20144 Milano (IT)**
• **Proto, Egidio**
**21013 Gallarate (VA) (IT)**
• **Benfatto, Davide**
**20149 Milano (IT)**

(74) Representative: **Cioni, Carlo**
**STUDIO CIONI & PIPPARELLI,**
**Via Quadronno, 6**
**20122 Milano (IT)**

(54) **Method to efficiently manage a channel coding device**

(57) Method to efficiently handle error-control coding of speech signals transmitted between at least two devices, where at least one of them comprises at least one of them comprises at least two vocoders comprising the following steps:

store the vocodes indetification numbers in a suitable memory in each device;

store in a suitable memory a set of information, each comprising at least one parameter related to the settings of a channel coder;
associate a vocoder identification number to the settings of a parametric channel coder;
insert these settings in the channel coding procedure.

FIGURE 1: Protocol scheme for the management of multiple vocoders

## Description

### Technical field

The following invention generally relates to the field of digital land-mobile radio communications. More in detail, the invention is concerned with a method to perform efficient channel coding of voice frames in systems employing one or multiple vocoders.

### Background of the invention

In the field of digital land-mobile radios, devices named "vocoders" (i.e. "voice coders") perform digital compression of speech signals, changing voice fragments having a duration of T seconds to K-bit blocks of binary digits, in the following named Voice Frames (VFs).

Existing vocoders attain high efficiency in the digital conversion of signals, delivering good intelligibility of speech even when low rates K/T are employed, for example ranging from 2 to 15 kb/s.

Voice coding algorithms are usually based on a parametric model of the human vocal apparatus. Some parameters in this model are essential for the intelligibility of synthesized voice at the decoder side, whereas others change less vital qualities only, such as tone. This is the reason why bits in a VF are not equally important. A high level of protection from transmission errors is required for the most important bits, since their erroneous interpretation will compromise performances.

Digital land-mobile radios must work even under severe propagation impairments, since the level of the received field can be very low and multipath propagation causes both fast carrier fluctuations and time-varying spectral distortion.

To overcome these drawbacks, a suitable error-control-coding scheme (i.e, channel coding) must be devised in order to protect the transfer of VFs on the radio channel.

Most error control techniques are based on the insertion of redundant control digits in the binary flow of the digitized source; using this approach, the final block size (N) of each coded VF is greater than the original (K).

Coding schemes can be used for both error detection and error correction purposes, or even a mixture of them.

The most important channel coding schemes are block and convolutional codes.

In the first case, data coming from a digital source are divided into k-bit blocks and then encoded, giving n bit packets; therefore, n-k is the redundancy applied to each packet. The "code rate" is defined as k/n. For example, Cyclical Redundancy Check (CRC) correspond to a well known class of block codes used for error-detection purposes only.

Convolutional codes protect user data by means of an encoder made up of a shift register with length CL ("constraint length") having proper connections to some modulo-two adders (exclusive-or gates). Every clock period, k bits are brought in the shift register and as a result n coded digits are computed. k/n is the code rate. A method called "forced termination" is used to adapt this continuous flow processing to a packeted transmission; this technique accomplishes to append CL-k known digits (for example, '00...0') at the end of each K-digit block.

Most land mobile systems employ a single vocoder and specify the related channel coding scheme. A typical example, selected in the field of Professional Mobile Radio, is APCO (Association of Public-safety Communications Officers) Project 25, where speech signals are digitized by means of a 4.4 kb/s vocoder employing IMBE (Improved Multi-Band Excitation) technology. In this case, the channel coding scheme - relying on a suitable mixture of block codes - exploits a detailed knowledge of the VF format and of the physical meaning of each binary digit in a VF.

Currently, a new standard for digital mobile radio is being developed within ETSI (European Telecommunications Standards Institute) called DIIS (Digital Interchange of Information and

Signalling). This standard will specify a preferred vocoder for basic implementations, but also allows the addition of other (optional) solutions. Therefore, an appropriate interface must be designed in order to adapt a plurality of voice coding solutions. In each case, adequate error protection shall be delivered to VFs. In order to establish a common voice coder at the call set-up phase, DIIS protocol will include a suitable signalling procedure ("vocoder negotiation").

The possibility to deliver a voice call service without being tied up to a single vocoder device is a potential advantage for the commercial success of DIIS radios. In future, infact, better solutions for voice coding could exist and with our invention minor adjustments shall be made to the vocoder interface to operate with them.

### Description of the invention

The following invention relates to a method to efficiently handle error-control-coding of speech signals transmitted between at least two devices, where at least one of them comprises at least two vocoders, the method itself comprising the following steps:

store the vocoder identification numbers in a suitable memory in each device;
store in a suitable memory a set of information, each comprising at least one parameter related to the settings of a channel coder;
associate a vocoder identification number to the settings of a parametric channel coder;
insert these settings in the channel coding procedure.

The invention allows slotting in new voice coders into the communication devices, and the vocoder interface of the system will manage this without making any changes to the busrt structure of the radio transmission, operation that would imply high costs in research and development. Our procedure instead requires only performing minor adjustments to the program memories of the involved devices.

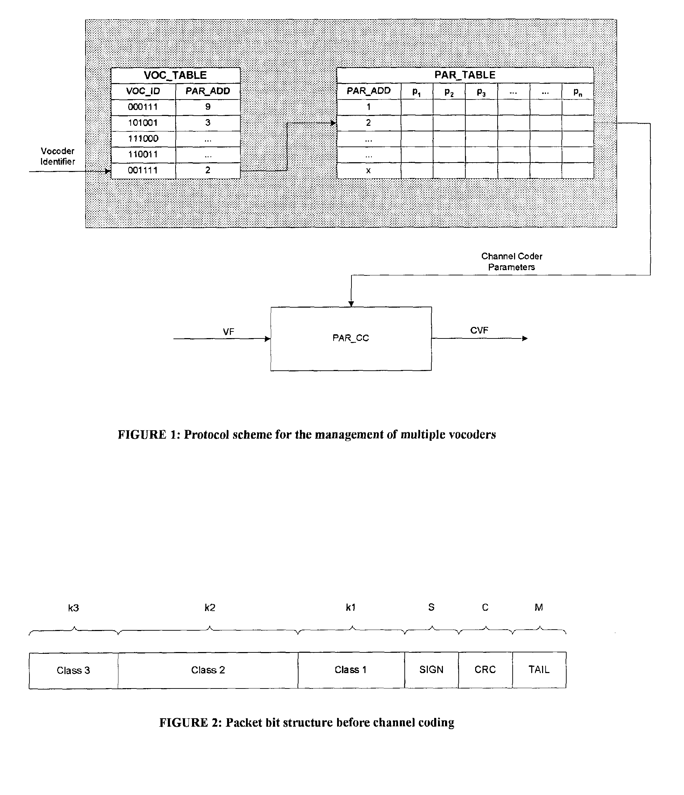

More precisely, with reference to Figure 1 (showing a scheme of the interface required to manage multiple vocoders), the invention needs:

to label each usable voice coder with an unique identification number (VOC_ID);
to store in the device memories, in a table named VOC_TABLE, the possible VOC_IDs;
to use a single parametric channel coder (PAR_CC) to encode VFs and afford error-control-coding; this encoder shall be completely set specifying the t-uple PAR = (p1,p2,...pn);
to write in VOC_TABLE a number called PAR_ADD - associated to each VOC_ID - and holding the address of a row of a second table called PAR_TABLE;
to write in the rows of PAR_TABLE PAR the t-uples PARs that correspond to valid settings of the PAR_CC.

In the call set-up phase, vocoder negotiation terminates when the involved devices agree with each other with respect to the VOC_ID that shall be used for the call. The invention requires that the devices search the VOC_TABLE for the established VOC_ID and read the corresponding PAR t-uple in PAR_TABLE. Please note that the same t-uple could be associated to more than one VOC_ID. The insertion of a new vocoder implies a new row to be stored in VOC_TABLE, therefore new values of VOC_ID and PAR_ADD shall be written.

An alternative solution could be to store both VOC_IDs and PARs in a single table named VOC_ID_PAR.

A preferred embodiment of the invention is based upon the error-correcting codes known as RCPC (Rate Compatible Punctured Convolutional codes) [J. Hagenauer, "Rate-Compatible Punctured Convolutional Codes (RCPC Codes) and their Applications", IEEE Transactions on Communications, vol. 36, no 4, April 1986], in addition to a suitable block code (CRC) to detect residual errors.

An RCPC encoder allows deriving an entire class of codes from a single parent code by means of iterative puncturing. This technique is well known to everyone who is skilled in the art and corresponds to avoid the transmission of some bits according to a suitable rule; subsequent puncturings augment the code rate in a step-by-step fashion.

In the present invention we assume that the binary digits coming from the vocoder are divided into some sensitivity classes (for example, named 1, 2 and 3), composed of k1, k2 and k3 bits. k1, k2 and k3 are non negative integer numbers such that k1+k2+k3 = K. Class 1 collects the most sensitive bits with respect to signal intelligibility, whereas class 3 entails the least important.

The relative importance of bits belonging to different sensitivity classes is a kind of SSI (Source Significance Information) and can be conveniently employed in the application of RCPC codes. More in details, properly setting RCPC coder, different levels of protection are afforded, for example given more redundancy to Class 1 , therefore allowing message recovery also under very noisy channels.

Before applying RCPC encoding, the VFs shall be equipped with some control fields, namely CRC, TAIL and SIGN; the resulting block shall be scheduled as depicted in Figure 2. The control fields are aimed as follows:

CRC field, composed of C bits, entails the parity check digits to detect residual errors in the VF;
TAIL field, composed of M bits (M is equal to the encoder memory), allows more efficient RCPC decoding;
SIGN field, composed of S bits, is used for VFs associated signalling.

In the present embodiment, we will assume that Class 3 is left uncoded. We apply rate r2 to Class 2 and rate r1 to the block composed of Class 1 bits plus CRC, SIGN and TAIL fields.

RCPC encoder outputs a coded block named CVF (Coded VF) entailing N = c1+c2+c3 digits, being:

$$c1 = (k1+C+M+S)/r1;$$

$$c2 = k2/r2;$$

$$c3 = k3.$$

A trivial requirement is that c1 and c2 have to be integer numbers.

It is mostly advisable that, in spite of the variability of VFs format, CVFs reach a common dimension F; as a consequence, D = F-N dummy bits might be appended.

The valid t-uples {k1,k2,k3,r1,r2,D} to properly initialize the RCPC encoder can be precomputed and stored in PAR_TABLE table, thereby letting p1 = k1, p2 = k2, p3 = k3, p4 = r1, p5 = r2, p6 = D.

It is also applicable to this invention the memory, to be used as in the described procedure, comprising, in the same or in different tables, the data related to the vocoder identification numbers and the parameters related to the settings of a channel coding device. The preparation of this memory and the included tables must be made in accordance with the description exemplified in the preceding lines; these examples are only illustrative and the invention shall not be therefore limited by them.

**Claims**

1. Method to efficiently handle error-control coding of speech signals transmitted between at least two devices, where at least one of them comprises at least one of them comprises at least two vocoders comprising the following steps:

   store the vocodes indetification numbers in a suitable memory in each device;
   store in a suitable memory a set of information, each comprising at least one parameter related to the settings of a channel coder;
   associate a vocoder identification number to the settings of a parametric channel coder;
   insert these settings in the channel coding procedure.

2. Method to efficiently handle error-control coding according to the preceding claim wherein the parametric channel coder realization is preferably based upon the error-correcting codes know as RCPC.

3. Method to efficiently handle error-control coding accordig to claim no. 1 wherein the parametric channel coder is preferably set by the specification of t-uple parameters.

4. Method to efficiently handle error-control coding according to claims 2 and 3 wherein use is made of t-uple parameters of the kind (K1, K2, K3, r1 , r2, D).

5. Method to efficiently handle error-control coding according to the preceding claim wherein the t-uple parameters to set RCPC encoder are precomputed and sotred thereby letting p1=K1, p2=K2, p3=K3, p4=r1, p5=r2, p6=D.

6. Data base to be used in the method according to any preceding claim comprising, in the same a in different tables, the data related to the vocoder identification numbers and the parameters related to the settings of a channel coding device.

| VOC_TABLE | | PAR_TABLE | | | | | | |
|---|---|---|---|---|---|---|---|---|
| VOC_ID | PAR_ADD | PAR_ADD | $p_1$ | $p_2$ | $p_3$ | ... | ... | $p_n$ |
| 000111 | 9 | 1 | | | | | | |
| 101001 | 3 | 2 | | | | | | |
| 111000 | ... | ... | | | | | | |
| 110011 | ... | ... | | | | | | |
| 001111 | 2 | x | | | | | | |

Vocoder Identifier

Channel Coder Parameters

VF → PAR_CC → CVF

**FIGURE 1: Protocol scheme for the management of multiple vocoders**

| k3 | k2 | k1 | S | C | M |
|---|---|---|---|---|---|
| Class 3 | Class 2 | Class 1 | SIGN | CRC | TAIL |

**FIGURE 2: Packet bit structure before channel coding**